# EUROPÄISCHE PATENTSCHRIFT

(11) **EP 2 348 376 B1**
(45) Veröffentlichungstag und Bekanntmachung des Hinweises auf die Patenterteilung: **29.05.2013**
(21) Anmeldenummer: 11000251.6
(22) Anmeldetag: 14.01.2011
(51) Int. Cl.: G05D 7/01

(54) **Stromregelventil mit Dämpfungskammer**
Flow control valve with damping chamber
Vanne de contrôle de débit dotée d'une chambre d'amortissement

(30) Priorität: 23.01.2010 DE 102010005524
(43) Veröffentlichungstag der Anmeldung: 27.07.2011
(73) Patentinhaber: Robert Bosch GmbH, 70469 Stuttgart (DE)
(72) Erfinder: Imhof, Rainer, 97833 Frammersbach (DE); Spahn, Wolfgang, 97737 Gemünden am Main (DE)
(74) Vertreter: Thürer, Andreas

(56) Entgegenhaltungen:
- WO-A1-86/00731
- US-A- 3 724 485
- US-A1- 2008 230 729
- US-B2- 6 966 329

## Beschreibung

Die Erfindung betrifft ein Stromregelventil gemäß dem Oberbegriff des Patentanspruchs 1.

Grundsätzlich sind Stromventile Ventile, die zur Regulierung des Mengenstroms eines verwendeten Fluids dienen. Ein Drosselventil als eine Untergruppe eines Stromventils ist eine verstellbare, durch das Ventil bewirkte Verengung im Leitungsdurchfluss. Durch den hierbei sich erhöhenden Durchflusswiderstand ändert sich auch der Volumenstrom in Abhängigkeit des über das Ventil sich einstellenden Druckgefälles. Ein Stromregelventil als eine weitere Untergruppe eines Stromventils ist im Unterscheid zum vorstehend genannten Drosselventil zusätzlich mit einer Druckkompensation ausgerüstet. Hierdurch bleibt ein eingestellter Volumenstrom auch bei Veränderung eines über das Ventil sich einstellenden Druckgefälles unverändert, d.h. der Volumenstrom ist von dem am Ventil aktuell vorhandenen Druckgefälle unabhängig. Konkreter ausgedrückt wird dies prinzipiell dadurch erreicht, indem einer einstellbaren Messblende eine Druckwaage zugeordnet ist.

Die WO 86/00731 und die US 3,724,485 zeigen Stromregler mit Regelkolben, die mit Druck stromauf einer einstellbaren Messblende in Öffnungsrichtung und mit Druck stromab der Messblende in Schließrichtung beaufschlagt sind. Die Bewegung des Regelkolbens wird durch eine Dämpfungskammer und eine Dämpfungsblende bzw. Dämpfungsdüse gedämpft.

Nachteilig an derartigen Stromreglern ist, dass die Dämpfung eines bereits gefertigten Stromreglers theoretisch nur mit sehr hohem Aufwand und praktisch nicht geändert werden kann.

Weiterhin ist es bekannt einer einstellbaren Messblende eine Druckwaage zuzuordnen, die von einer Federkraft sowie einem stromab zur Messblende vorherrschenden Druck in Öffnungsrichtung und von einem stromauf zur Messblende vorherrschenden Druck in Schließrichtung beaufschlagt wird. Diese Druckwaage kann dabei der veränderbaren Messblende grundsätzlich unmittelbar vor- oder nachgeschaltet, sowie in der Messblende integriert sein.

Aus dem Stand der Technik beispielsweise gemäß der US 6,966,329 B2 ist ein Stromregelventil dieser Gattung bekannt.

Hierbei handelt es sich um ein vorgesteuertes Proportional-Stromregelventil mit einem Gehäuse, in dem ein hohler Kompensationskolben axial verschieblich angeordnet ist. In dem Kompensationskolben ist ein Dosierungs-Führungs-Bauteil gelagert, wobei ein Regelkolben gleitfähig innerhalb des Führungs-Bauteils angeordnet ist. Im Axialabstand zum Dosierungs-Führungs-Bauteil ist innerhalb des Kompensationskolbens ferner ein Dämpfungs-Führungs-Element gleitfähig vorgesehen, das eine Dämpferkammer im Kompensationskolben ausbildet. In die Dämpferkammer ist eine Vorspannfeder eingesetzt, die das Dämpfungs-Führungs-Element in eine Richtung vorspannt, um mit dem Dosierungs-Führungs-Bauteil stirnseitig in Anlage zu kommen und die den Kompensationskolben in eine entgegen gesetzte Richtung vorspannt, um mit dem Gehäuse stirnseitig in Anlage zu kommen. In den hohlen Regelkolben ist eine Regelfeder eingesetzt, die den Regelkolben stirnseitig gegen das Dämpfungs-Führungs-Element drückt. Schließlich ist ein Patronengehäuse vorgesehen, in dem eine Vorsteuerventilbaugruppe untergebracht ist und das über einen Adapter am Ventilgehäuse montiert ist.

Obgleich gemäß diesem Stand der Technik die Axialbewegung des Regelkolbens durch das Dämpfungs-Führungs-Element grundsätzlich gedämpft wird, erweist sich die gesamte Ventilkonstruktion als äußerst aufwändig und damit störanfällig insbesondere im Kleinsignalbereich.

Demzufolge ist es eine Aufgabe der vorliegenden Erfindung, ein Ventil dieser Gattung zu schaffen, das einen einfacheren Aufbau hat. Ein Ziel der Erfindung ist es dabei, die Störanfälligkeit zu reduzieren und das Ventil flexibler für individuelle Einsatzanforderungen durch Bereitstellung einer Systemabstimmungsmöglichkeit zu machen.

Diese Aufgabe wird durch ein Stromregelventil, vorzugsweise zur Einstellung eines Druckmittelvolumenstroms mit den Merkmalen des Patentanspruchs 1 gelöst. Vorteilhafte Ausgestaltungen sind Gegenstand der Unteransprüche.

Das Grundprinzip der Erfindung besteht demzufolge darin, eine Dämpfungskammer durch einen unmittelbar am Ventilgehäuse gelagerten Ventilkolben unter Zusammenwirkung dieser beiden Bauteile auszubilden, d.h. die Dämpfungskammer ist zwischen dem Ventilkolben und dem Ventilgehäuse (Patrone) ausgebildet. Damit vereinfacht sich die gesamte Konstruktion des Ventils.

Dabei ist die Dämpfungswirkung durch eine mit der Dämpfungskammer fluidverbundene Drosselöffnung eingestellt oder einstellbar. Zu diesem Zweck ist die Dämpfungskammer vorzugsweise an einem axialen Endabschnitt des Ventilkolbens zwischen dem Ventilkolben, dem Ventilgehäuse und einer axialen Abschlussscheibe ausgebildet, in der der Ventilkolben in Axialrichtung geführt ist. Dabei ist die Drosselöffnung in vorteilhafter Weise durch einen Ringspalt zwischen der Abschlussscheibe und dem Ventilkolben und/oder durch zumindest eine Bohrung in der Abschlussscheibe ausgebildet. Dies ergibt eine äußerst kompakte und gleichzeitig einfache Bauweise, wodurch Herstellungskosten verringert werden. Gleichzeitig besteht die Möglichkeit, Abschlussscheiben mit unterschiedlichen Bohrungsdurchmessern und damit unterschiedlichen Drosselwerten vorzubereiten und diese bedarfsgerecht zu verbauen. Auf diese Weise kann die Dämpfungswirkung des Ventils an die Kenngrößen einer Fluidanlage einfach angepasst werden, in der das erfindungsgemäße Ventil eingebaut werden soll. Dies erhöht die Funktionalität und Flexibilität des Ventils.

Eine vorteilhafte Weiterbildung der Erfindung sieht vor, dass die Abschlussscheibe durch einen Sicherungsring gehalten ist, der vorzugsweise als Federring ausgebildet ist und in eine innere Umfangsnut im Ventilgehäuse formschlüssig eingreift. Hierdurch ist kein axiales Spiel zwischen dem Ventilgehäuse und der Anschlussscheibe und es verbessert sich das Ansprechverhalten des Ventils.

Ferner ist es vorteilhaft, dass der Ventilkolben einen Gleitabschnitt hat, der mit dem Ventilgehäuse in Gleitkontakt steht und der an dem einen axialen Endabschnitt des Ventilkolbens von einem radialen Rücksprung begrenzt ist, der in der Abschlussscheibe gleitend aufgenommen ist und dabei die Dämpfungskammer axial zwischen der Abschlussscheibe und dem Gleitabschnitt des Ventilkolbens sowie radial zwischen dem Ventilkolben und dem Ventilgehäuse definiert. Auf diese Weise kann das Volumen der Dämpfungskammer durch geringe bearbeitungstechnische Maßnahmen individuell an die Rahmenbedingungen der jeweiligen Fluidanlage angepasst werden.

Die Erfindung wird nachstehend anhand eines bevorzugten Ausführungsbeispiels unter Bezugnahme auf die begleitende Figur näher erläutert.

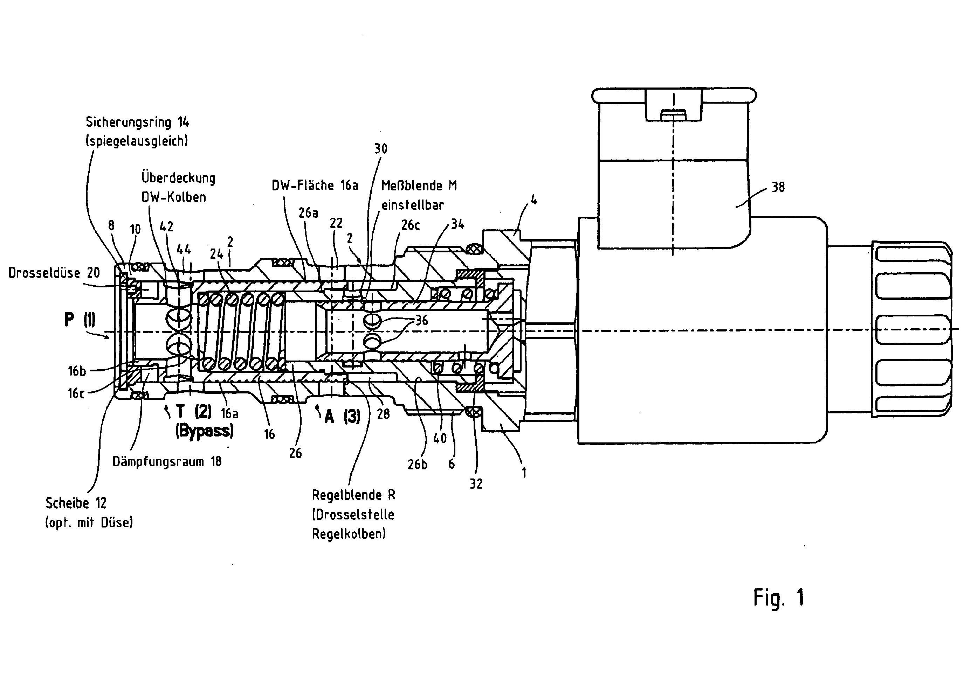

Es zeigt
Fig. 1 ein direkt betätigtes Stromregelventil gemäß einem ersten bevorzugten Ausführungsbeispiel der Erfindung mit integrierter Druckwaage und Druckwaagekolben-Dämpfung.

In der Fig. 1 ist ein vorzugsweise direkt betätigtes Stromregelventil gemäß dem bevorzugten Ausführungsbeispiel der Erfindung in cartridge-Bauweise dargestellt. Demzufolge hat das erfindungsgemäße Stromregelventil ein patronenförmiges Gehäuse in der Form einer Hülse 1, die an Ihrer äußeren Mantelfläche mit einer Anzahl von axial beabstandeten Radialstufen 2 ausgeformt ist. Die Hülse 1 hat an einem axialen Endabschnitt einen radial vorstehenden Anschlagsring 4, dem unmittelbar ein Außengewindeabschnitt 6 vorgeordnet ist, damit die Hülse 1 beispielsweise in einen nicht gezeigten Ventilblock eingeschraubt werden kann.

Auf der dem Anschlagring 4 gegenüberliegenden axialen Endseite der Hülse 1 ist ein Axialanschluss P vorzugsweise für das Anschließen einer (nicht gezeigten) Druckmittelzuführeinrichtung vorgesehen. An dieser axialen Endseite ist die Hülse 1 mit einer inneren Umfangsnut 8 ausgeformt, an die sich in einem geringen Axialabstand ein umlaufender innerer Radialabsatz 10 mit geringerem Durchmesser anschließt. Zwischen diesem Radialabsatz 10 und der Umfangsnut 8 ist eine Abschlussscheibe 12 eingesetzt, die von einem Sicherungsring 14 (Federring) axial möglichst spielfrei gehalten wird, der in die Umfangsnut 8 eingeschnappt ist.

Des Weiteren ist in die Hülse 1 ein hohler/hülsenförmiger Druckwagekolben 16 axial verschieblich eingesetzt, der einen axial sich erstreckenden Gleitabschnitt 16a hat, welcher unmittelbar mit der Hülse 1 an deren Innenwandung in Gleitkontakt steht. An dem zur Abschlussscheibe 12 zugewandten axialen Endabschnitt des Druckwagenkolbens 16 weist dieser einen radialen äußeren Rücksprung 16b auf, der sich ausgehend vom Gleitabschnitt 16a bis zu der der Abschlussscheibe 12 zugewandten Stirnseite des Druckwaagekolbens 16 erstreckt. In der Abschlussscheibe 12 ist eine Durchgangsbohrung oder Durchbruch ausgeformt, derart, dass der Druckwaagekolben 16 im Bereich seines äußeren radialen Rücksprungs 16a in die Abschlussscheibe 12 gleitend (zentral) eingeführt werden kann. Hierdurch bildet sich zwischen dem Druckwagenkolben 16, der inneren Hülsenwandung und der Abschlussscheibe 12 ein ringförmiger Raum 18 aus, der eine nachfolgend beschriebene Dämpfungskammer 18 definiert. Des Weiteren ist in der Abschlussscheibe 12 zumindest eine weitere dezentrale Durchgangsbohrung 20 mit vorbestimmtem (kleinem) Durchmesser ausgeformt, welche die Dämpfungskammer mit dem Axialanschluss P verbindet und eine nachfolgend noch beschriebene Drosseldüse 20 definiert.

Die Gehäusehülse 1 hat in einem axialen Mittenabschnitt zumindest eine radiale Durchgangsbohrung 22, die einen Auslassanschluss A des erfindungsgemäßen Ventils darstellt. Der Druckwaagekolben 16 hat dabei eine axiale Länge, die derart definiert ist, dass der Druckwaagekolben 16 in einer ersten zurückgezogenen Position (maximal zur Abschlussscheibe 12 beabstandet) die Radialbohrung 22 in der Gehäusehülse vollständig verschließt. In dieser Position hat die Dämpfungskammer 18 ein maximales Raumvolumen.

Die innere axiale Stirnseite des Druckwaagekolbens 16 bildet dabei mit der Gehäusehülse 1 im Bereich der darin ausgeformten Radialbohrung 22 eine Regelblende R des Ventils.

Der Druckwaagekolben 16 ist ferner mittels einer Vorspannfeder 24 in Richtung zur Abschlussscheibe 12 für ein Öffnen der Radialbohrung 22 in der Gehäusehülse 1 vorgespannt. Diese Vorspannfeder 24 ist hierfür in den hohlen Druckwaagekolben 16 eingesetzt und stützt sich hierfür an einem radial nach Innen vorstehenden Umfangsvorsprung 16c am Druckwaagekolben 16 axial ab. Ein gegengerichteter Federsitz wird ferner durch eine Führungshülse 26 gebildet, die an einem zur Abschlussscheibe 12 abgewandten Endabschnitt in den Druckwaagekolben 16 gleitend eingeführt ist und dabei gleichzeitig einen Axialanschlag für den Druckwaagekolben 16 zur Definition der ersten vorstehend beschriebenen Position des Druckwaagekolbens 16 bildet. Hierfür hat die Führungshülse 26 an einem Endabschnitt einen radial äußeren Absatzvorsprung 26a, der mit dem Druckwaagekolben 16 für einen Axialanschlag in Wirkeingriff bringbar ist. Die Führungshülse 26 hat des Weiteren zumindest an ihrem anderen Endabschnitt eine äußere Umfangsfläche 26b, die vorzugsweise dichtend mit der Gehäusehülse 1 an deren Innenwandung in Anlage ist. In einem axialen Mittenabschnitt 26c der Führungshülse 26 axial zwischen dem Druckwaagekolben 16 bzw. dem Absatzvorsprung 26a sowie der Anlagefläche 26b mit der Gehäusehülse 1 ist eine axial sich erstreckender umlaufender Ringraum 28 ausgebildet, welcher vom Druckwaagekolben 16 axial begrenzt wird. In diesen umlaufenden Ringraum 28 zwischen dem Druckwaagekolben 16 der Gehäusehülse 1 und der Führungshülse 26 mündet zumindest eine Radialbohrung 30 im Führungskolben 26 an einer axialen Stelle, die vom Druckwaagekolben 16 nicht überdeckt werden kann. Schließlich ist die Führungshülse 26 axial an ihrem inneren, dem Druckwaagekolben 16 abgewandten Endabschnitt durch einen an der Gehäusehülse 1 sich abstützenden Endanschlag 32 gehalten.

In der Führungshülse 26 ist von ihrer dem Druckwaagekolben 16 abgewandten Seite her ein Betätigungskolben 34 in Form einer Hülse gleitend sowie dichtend eingesetzt. Dieser Betätigungskolben 34 hat in einem Mittenabschnitt eine Anzahl von Radialbohrungen 36, die mit der zumindest einen Radialbohrung 30 in der Führungshülse 26 eine einstellbare Messblende M ausbilden. Das heißt, in Abhängigkeit von der axialen Relativposition zwischen dem Betätigungskolben 34 und der Führungshülse 26 wird die durch die jeweiligen Radialbohrungen 30, 36 sich ausbildende Messblende M in vorbestimmter Weise teilgeöffnet, wodurch der durch den radial äußeren Umfang der Führungshülse 26 sich ausbildende Ringraum einen Fluidzugang zu dem Axialanschluss P des Ventils erhält. Der Betätigungskolben 34 wird dabei in dem vorliegenden Ausführungsbeispiel gemäß der Fig. 1 direkt gesteuert, d. h. vorzugsweise mittels eines elektromagnetischen Stellantriebs 38 in Axialrichtung betätigt, wobei der Betätigungskolben 34 zusätzlich mittels einer Stellfeder 40 in eine gemäß der Fig. 1 dargestellte Schließposition vorgespannt ist, in welcher die durch die Radialbohrungen 30, 36 in dem Betätigungskolben 34 und der diese umgebenden Führungshülse 26 ausgebildete Messblende M vollständig geschlossen ist.

Schließlich ist an dem Druckwaagekolben 16 in einem axialen Abschnitt unmittelbar hinter dem Dämpfungsraum 18 mit einer Anzahl von Radialbohrungen 42 ausgebildet, welche in Abhängigkeit der Axialposition des Druckwaagekolbens 16 bezüglich der Gehäusehülse 1 mit einer weiteren Radialbohrung 44 in der Gehäusehülse 1 verbunden werden können, um hierdurch einen Bypasskreis T zu öffnen, wie dies nachfolgend noch beschrieben wird.

Die Funktionsweise des vorstehend konstruktiv beschriebenen Stromregelventils mit integrierter Druckwaage und Dämpfungskammer wird nachfolgend genauer beschrieben:

In der gemäß der Fig. 1 dargestellten Schaltposition ist der Betätigungskolben 34 unbetätigt, d. h. der vorzugsweise elektromagnetische Stellantrieb 38 ist in einem entregten Zustand. In diesem Fall wird der Betätigungskolben 34 durch die Stellfeder 40 in eine gemäß der Fig. 1 rechte Anschlagsposition gedrückt, in welcher die zwischen den Radialbohrungen 36 in dem Betätigungskolben 34 und der zumindest einen Radialbohrung 30 in der diese umgebenden Führungshülse 26 sich ausbildenden Messblende M völlig geschlossen ist. Demzufolge gelangt kein Druckmittel, welches über den Axialanschluss P des Ventils in den Innenraum des Druckwaagekolbens 16, der Führungshülse 26 sowie des Betätigungskolbens 34 gefördert wird, in den an der radialen Außenseite der Führungshülse 26 sich ausbildenden Ringraum 28. In dieser Schaltposition wird folglich der Druckwaagekolben 16 lediglich durch die Vorspannfeder 24 in Richtung zur Abschlussscheibe 12 gedrückt, wobei ein sich über die (Drossel-)Bohrung 20 an der Abschlussscheibe 12 aufbauender Gegendruck den Druckwaagekolben 16 gegen die Vorspannkraft der Vorspannfeder 24 in Richtung zum von der Führungshülse 26 ausgebildeten Axialanschlag 26a drückt. Das heißt, dass in dieser Schaltposition der Druckwaagekolben 16 die erste Axialposition einnimmt, in welcher die zwischen dem Druckwaagekolben 16 und der Gehäusehütse 1 ausgebildeten Regelblende R vollständig geschlossen und damit der Ausgangsanschluss A gesperrt wird. Des Weiteren wird in dieser Schaltposition eine Verbindung zwischen dem Axialanschluss P und dem Bypasskreis T geöffnet, sodass Druckmittel über das Stromregelventil gemäß dem bevorzugten Ausführungsbeispiel zirkulieren kann.

Wird nunmehr der vorzugsweise elektromagnetische Stellantrieb 38 betätigt, übt dieser eine axiale Stellkraft auf den Betätigungskolben 34, entgegen der Stellfederkraft aus, und verschiebt diesen in Axialrichtung zur Abschlussscheibe 12. Hierbei wird die zwischen der Führungshülse 26 und dem Betätigungskolben 34 ausgebildete Messblende M entsprechend dem eingestellten Stellwert des Betätigungskolben 34 geöffnet und somit ein gedrosselter Zugang zwischen dem Axialanschluss P des Ventils und dem zwischen der Führungshülse 26 und der Gehäusehülse 1 sich ausbildenden Ringraum 28 geschaffen. Der sich dadurch aufbauende Ringraumdruck bewirkt eine axiale Verschiebung des Druckwaagekolbens 16 in Richtung Abschlussscheibe 12, wobei diese Verschiebebewegung durch ein gedrosseltes Abströmen von Druckmittel aus der Dämpfungskammer 18 über die Axialdrosselbohrung 20 (oder Ringspalt) gedämpft wird.

Infolge der gedämpften Axialbewegung des Druckwaagekolbens 16 öffnet sich die zwischen dem Druckwaagekolben 16 und der Gehäusehülse 1 ausgebildeten Regelblende R, wodurch eine gedrosselte Öffnung zwischen dem Ringraum 28 und dem Ausgangsanschluss A des Ventils geschaffen wird. Gleichzeitig wird durch die axiale Bewegung des Druckwaagekolbens 16 die Verbindung zwischen dem Axialanschluss P und dem Bypasskreis T geschlossen. Daher kann nunmehr Druckmittel über den Axialanschluss P, die Messblende M, den Ringraum 28 sowie die Regelblende R in den Ausgangsanschluss A des Ventils strömen.

Anschließend sei darauf hingewiesen, dass das Stromregelventil mit integrierter Druckwaage und Dämpfungskammer auch so abgewandelt werden kann, indem die vorstehend beschriebene Direktansteuerung des Betätigungskolbens 34 durch einen Vorsteuermechanismus ersetzt ist. In diesem Fall betätigt der vorzugsweise elektromagnetische Antrieb 38 ein Vorsteuerventil, über welches der Betätigungskolben 34 axial verstellbar ist.

### Bezugszeichenliste

- 1: Gehäusehülse
- 2: Radialstufen
- 4: Anschlagring
- 6: Außengewindeabschnitt
- P: Axialanschluss
- 8: innere Umfangsnut
- 10: Radialabsatz
- 12: Abschlussscheibe
- 14: Sicherungsring
- 16: Druckwaage-Kolben
- 16a: Gleitabschnitt
- 16b: radial äußerer Rücksprung
- 16c: nach innen vorstehenden Umfangsvorsprung
- 18: Dämpfungskammer
- 20: Drosseldüse
- 22: radiale Durchgangsbohrung in Gehäusehülse
- A: Auslassanschluss
- R: Regelblende
- 24: Vorspannfeder
- 26: Führungshülse
- 26a: radial äußerer Absatzvorsprung
- 26b: radial äußere Anlagefläche
- 26c: radial zurückgesetzter äußerer Axial-Mitteabschnitt
- 28: Ringraum
- 30: Radialbohrung(en) in Führungshülse
- 32: Endanschlag
- 34: Betätigungskolben
- 36: Radialbohrung(en) im Betätigungskolben
- M: Messblende
- 38: elektrischer Stellantrieb / Vorsteuermechanismus
- 40: Stellfeder
- 42: Radialbohrung(en) in Druckwaage-Kolben
- 44: Radialbohrung(en) in Gehäusehülse 1
- T: Bypass-Anschluss

## Patentansprüche

1. Stromregelventil mit einem Druckwaage-Kolben (16), der axialverschieblich in einem als Patrone ausgebildeten Ventilgehäuse (1) gelagert ist, und mit einer Dämpfungskammer (18) zur Bewegungsdämpfung des Druckwaage-Kolbens (16) **dadurch gekennzeichnet, dass** der Druckwaage-Kolben (16) zusammen mit dem Ventilgehäuse (1) die Dämpfungskammer (18) ausbilden, wobei die Dämpfungswirkung durch eine mit der Dämpfungskammer (18) fluidverbundene Drosselöffnung (20) eingestellt oder einstellbar ist, und wobei die Dämpfungskammer (18) an einem axialen Endabschnitt des Druckwaage-Kolbens (16) zwischen dem Druckwaage-Kolben (16), dem Ventilgehäuse (1) und einer am Ventilgehäuse (1) dichtend fixierten axialen Abschlussscheibe (12) ausgebildet ist, in der der Druckwaage-Kolben (16) axial geführt ist.

2. Stromregelventil nach Anspruch 1, **dadurch gekennzeichnet, dass** die Drosselöffnung (20) durch einen Ringspalt zwischen der Abschlussscheibe (12) und dem Druckwaage-Kolben (16) und/oder zumindest eine Bohrung in der Abschlussscheibe (12) und/oder dem Ventilgehäuse (1) gebildet ist.

3. Stromregelventil nach einem der Ansprüche 1 und 2, **dadurch gekennzeichnet, dass** die Abschlussscheibe (12) durch einen Sicherungsring (14) gehalten ist, der vorzugsweise als Federring ausgebildet ist und in eine innere Umfangsnut (8) im Ventilgehäuse (1) formschlüssig eingreift.

4. Stromregelventil nach einem der vorstehenden Ansprüche 1 - 3, **dadurch gekennzeichnet, dass** der Druckwaage-Kolben (16) einen Gleitabschnitt (16a) hat, der mit dem Ventilgehäuse (1) in Gleitkontakt steht, und der an dem einen axialen Endabschnitt des Druckwaage-Kolbens (16) von einem radialen Rücksprung (16b) begrenzt ist, der in der Abschlussscheibe (12) gleitend aufgenommen ist und dabei die Dämpfungskammer (18) axial zwischen der Abschlussscheibe (12) und dem Gleitabschnitt (16a) des Druckwaage-Kolbens (16) definiert.

5. Stromregelventil nach einem der vorstehenden Ansprüche 1 - 4 **dadurch gekennzeichnet, dass** bei dem einen axialen Endabschnitts des Druckwaage-Kolbens (16) ein Axialanschluss (P) des Stromregelventils zur Druckmittelzufuhr ausgebildet ist, in den die Drosselöffnung (20) einmündet.

6. Stromregelventil nach einem der Ansprüche 1 bis 5, **dadurch gekennzeichnet, dass** der Druckwaagekolben (16) eine Gleithülse ist, die an ihrem anderen axialen Endabschnitt mit dem Ventilgehäuse (1) eine Regelblende (R) der Druckwaage bildet, zum geregelten Öffnen eines Auslassanschlusses (A) des Stromregelventils, wofür am Ventilgehäuse (1) zumindest eine vom Druckwaagekolben (16) verschließbare radiale Durchgangsbohrung (22) ausgebildet ist.

7. Stromregelventil nach Anspruch 6, **gekennzeichnet durch** eine Führungshülse (26), die in axialer Verlängerung zum Druckwaagekolben (16) sowohl in diesem als auch am Ventilgehäuse (1) gelagert ist und zwischen sich und dem Ventilgehäuse (1) einen den Druckwaagekolben (16) stirnseitig Druck-beaufschlagenden Ringraum (28) ausbildet.

8. Stromregelventil nach Anspruch 7, **gekennzeichnet durch** einen direkt- oder vorgesteuerten, hülsenförmigen Betätigungskoben (34), der axial verschieblich in der Führungshülse (26) geführt ist und mit dieser eine einstellbare Messblende (M) zur eingestellten Zufuhr an Druckmittel in den Ringraum (28) bildet.

9. Stromregelventil nach Anspruch 8, **dadurch gekennzeichnet, dass** die Messblende (M) durch eine Anzahl von Radialbohrungen (36) in dem Betätigungskolben (34) und diese in Abhängigkeit der axialen Relativlage überlappenden Radialbohrungen (30) in der Führungshülse (26) definiert ist.

## Claims

1. Flow control valve having a pressure regulator piston (16) mounted in an axially displaceable manner in a valve housing (1) formed as a cartridge, and having a damping chamber (18) for the motional damping of the pressure regulator piston (16), **characterized in that** the pressure regulator piston (16) together with the valve housing (1) form the damping chamber (18), the damping effect being adjusted or adjustable by a restriction opening (20) fluid-connected to the damping chamber (18) and the damping chamber (18) being configured on an axial end portion of the pressure regulator piston (16), between the pressure regulator piston (16), the valve housing (1) and an axial end plate (12) which is fixed sealingly on the valve housing (1) and in which the pressure regulator piston (16) is axially guided.

2. Flow control valve according to Claim 1, **characterized in that** the restriction opening (20) is formed by an annular gap between the end plate (12) and the pressure regulator piston (16) and/or by at least one bore in the end plate (12) and/or the valve housing (1).

3. Flow control valve according to one of Claims 1 and 2, **characterized in that** the end plate (12) is held by a locking ring (14), which is preferably configured as a spring ring and engages positively in an inner peripheral groove (8) in the valve housing (1).

4. Flow control valve according to one of the preceding Claims 1-3, **characterized in that** the pressure regulator piston (16) has a sliding portion (16a), which is in sliding contact with the valve housing (1) and which, on one axial end portion of the pressure regulator piston (16), is delimited by a radial recess (16b), which is slidingly accommodated in the end plate (12) and defines the damping chamber (18) axially between the end plate (12) and the sliding portion (16a) of the pressure regulator piston (16).

5. Flow control valve according to one of the preceding Claims 1-4, **characterized in that** on one axial end portion of the pressure regulator piston (16) is configured an axial port (P) of the flow control valve for the pressure medium supply, into which port the restriction opening (20) emerges.

6. Flow control valve according to one of Claims 1 to 5, **characterized in that** the pressure regulator piston (16) is a sliding sleeve, which on its other axial end portion forms with the valve housing (1) a control orifice (R) of the pressure regulator, for the controlled opening of an outlet port (A) of the flow control valve, for which purpose at least one radial through bore (22) closable by the pressure regulator piston (16) is configured on the valve housing (1).

7. Flow control valve according to Claim 6, **characterized by** a guide sleeve (26), which in axial extension to the pressure regulator piston (16) is mounted both in this and on the valve housing (1) and forms between itself and the valve housing (1) an annular space (28) which imparts pressure on the end face of the pressure regulator piston (16).

8. Flow control valve according to Claim 7, **characterized by** a direct-operated or pilot-operated sleeve-shaped actuating piston (34), which is guided in an axially displaceable manner in the guide sleeve (26) and forms with this an adjustable measuring orifice (M) for the set supply of pressure medium into the annular space (28).

9. Flow control valve according to Claim 8, **characterized in that** the measuring orifice (M) is defined by a number of radial bores (36) in the actuating piston (34) and by radial bores (30) in the guide sleeve (26), which latter bores overlap said first number of radial bores in dependence on the axial relative position.

## Revendications

1. Soupape de régulation de débit comprenant un piston de manomètre (16), qui est monté de manière déplaçable axialement dans un boîtier de soupape (1) réalisé sous forme de cartouche, et comprenant une chambre d'amortissement (18) pour l'amortissement du mouvement du piston de manomètre (16), **caractérisée en ce que** le piston de manomètre (16) conjointement avec le boîtier de soupape (1) constitue la chambre d'amortissement (18), l'effet d'amortissement étant ajusté ou pouvant être ajusté par une ouverture d'étranglement (20) reliée fluidiquement à la chambre d'amortissement (18), et la chambre d'amortissement (18) étant réalisée au niveau d'une portion d'extrémité axiale du piston de manomètre (16) entre le piston de manomètre (16), le boîtier de soupape (1) et un disque de terminaison axial (12) fixé de manière hermétique au boîtier de soupape (1), dans lequel est guidé axialement le piston de manomètre (16).

2. Soupape de régulation de débit selon la revendication 1, **caractérisée en ce que** l'ouverture d'étranglement (20) est formée par un espace annulaire entre le disque de terminaison (12) et le piston de manomètre (16) et/ou au moins un alésage dans le disque de terminaison (12) et/ou le boîtier de soupape (1).

3. Soupape de régulation de débit selon l'une quelconque des revendications 1 et 2, **caractérisée en ce que** le disque de terminaison (12) est maintenu par une bague de fixation (14), qui est réalisée de préférence sous forme de bague élastique et qui vient en prise par engagement par correspondance de forme dans une rainure périphérique interne (8) dans le boîtier de soupape (1).

4. Soupape de régulation de débit selon l'une quelconque des revendications précédentes 1 - 3, **caractérisée en ce que** le piston de manomètre (16) présente une portion de glissement (16a), qui est en contact de glissement avec le boîtier de soupape (1), et qui, au niveau de l'une des portions d'extrémité axiales du piston de manomètre (16), est limitée par une saillie radiale (16b), qui est reçue de manière glissante dans le disque de terminaison (12) et qui définit ainsi la chambre d'amortissement (18) axialement entre le disque de terminaison (12) et la portion de glissement (16a) du piston de manomètre (16).

5. Soupape de régulation de débit selon l'une quelconque des revendications précédentes 1 - 4, **caractérisée en ce qu'**un raccord axial (P) de la soupape de régulation de débit est réalisé en vue de l'alimentation en fluide sous pression au niveau de l'une des portions d'extrémité axiales du piston de manomètre (16), dans lequel raccord axial débouche l'ouverture d'étranglement (20).

6. Soupape de régulation de débit selon l'une quelconque des revendications 1 à 5, **caractérisée en ce que** le piston de manomètre (16) est un manchon coulissant, qui forme, au niveau de son autre portion d'extrémité axiale, avec le boîtier de soupape (1), un diaphragme de régulation (R) du manomètre, pour l'ouverture régulée d'un raccord de sortie (A) de la soupape de régulation de débit, au moins un alésage traversant radial (22) pouvant être fermé par le piston de manomètre (16) étant réalisé à cet effet sur le boîtier de soupape (1).

7. Soupape de régulation de débit selon la revendication 6, **caractérisée par** un manchon de guidage (26), qui est monté dans le prolongement axial du piston de manomètre (16) à la fois dans ce dernier et sur le boîtier de soupape (1) et qui constitue entre lui-même et le boîtier de soupape (1) un espace annulaire (28) sollicitant le piston de manomètre (16) avec une pression du côté frontal.

8. Soupape de régulation de débit selon la revendication 7, **caractérisée par** un piston d'actionnement en forme de manchon (34) commandé directement ou piloté, qui est guidé de manière déplaçable axialement dans le manchon de guidage (26) et qui forme avec celui-ci un diaphragme de mesure ajustable (M) pour l'alimentation ajustée en fluide sous pression dans l'espace annulaire (28).

9. Soupape de régulation de débit selon la revendication 8, **caractérisée en ce que** le diaphragme de mesure (M) est défini par une pluralité d'alésages radiaux (36) dans le piston d'actionnement (34) et par des alésages radiaux (30) chevauchant ceux-ci en fonction de la position axiale relative dans le manchon de guidage (26).
